Europäisches Patentamt

European Patent Office

Office européen des brevets

(11) Publication number: **0 105 549**
**A1**

## (12) EUROPEAN PATENT APPLICATION

(21) Application number: 83201321.3

(22) Date of filing: 13.09.83

(51) Int. Cl.³: **B 23 Q 1/06**
**B 23 C 1/00**

(30) Priority: 14.09.82 NL 8203563

(43) Date of publication of application:
18.04.84 Bulletin 84/16

(84) Designated Contracting States:
DE FR GB IT NL

(71) Applicant: Fokker B.V.
P.O. Box 7600
NL-1117 ZJ Schiphol(NL)

(72) Inventor: Blaauw, Lambertus Hendrik
Adelaartlaan 216
NL-5665 CS Geldrop(NL)

(74) Representative: van der Beek, George Frans et al,
Nederlandsch Octrooibureau Johan de Wittlaan 15 P.O.
Box 29720
NL-2502 LS Den Haag(NL)

(54) System for machining or treating workpieces clamped into subframes.

(57) System for machining or treating workpieces clamped into subframes, comprising tools movable parallel and perpendicular to a workpiece under control of a control unit. The system comprises at least two subframes which can be positioned or are positioned into this system such that said tools can be moved into the operating position with respect to each of the subframes in the system to machine or treat the workpieces clamped into the respective subframes under control of said control unit.

fig-1

EP 0 105 549 A1

Croydon Printing Company Ltd.

System for machining or treating workpieces clamped into subframes.

The invention relates to a system for machining or treating work pieces clamped into subframes comprising tools movable parallel to and perpendicular to a workpiece under control of a control unit.

Such a system is for instance known from the U.S.Patent 4,310,964. The system illustrated and described in this U.S.Patent comprises a main frame embodied as a portal-shaped construction and has a number of workpiece clamping elements which are partly attached to a frame beam positioned near the workfloor and are partly attached to a second frame beam positioned at a distance above said first frame beam. A workpiece to be machined can be clamped into said clamping elements. The frame furthermore comprises guiding elements to which various tools can be attached. Said guiding elements and said tools can be controlled by a control unit such that operations can be carried out on the workpiece at locations selected by the control unit. These operations are for instance clamping subassemblies of the workpiece together, drilling and reaming of holes, realizing rivet connections etc.

In this known system a workpiece to be machined is clamped into the workpiece clamping elements during a first period. Thereafter in a second period the workpiece is treated under control of the control unit and using the tools which are movable by means of the guiding elements. Thereafter in a third period the treated workpiece is removed out of the clamping elements.

During said first and third period the control unit and the tools are inoperative. Because said first and third time period are relatively long in comparison with the second period in which the tools are operative under control of the control unit, the return on investment of this system is relatively low. Furthermore the operating capacity of this known system is as result of the first and third period in which no workpiece is treated, relatively low.

An object of the invention is now to eliminate said disadvantages and to indicate how such a system can be used much more efficiently.

According to the invention said object is met by a system of the above mentioned type which comprises at least two subframes which can be positioned or are positioned into the system such that the tools can be moved into the operating position with respect to each of the subframes in the system to machine or treat the workpieces clamped into the respective subframes under control of said control unit.

By using at least two subframes with the thereto attached workpiece clamping elements it is possible to process a workpiece in the one subframe and simultaneously to clamp a new workpiece into the second subframe. As soon as the processing is completed the tools are brought into the operating position with respect to the second subframe, into which in the meantime the next workpieces clamped in, so that the first subframe becomes free. The treated workpiece can now be released from this first subframe and a new workpiece can be clamped in. Therefore in the system according to this application a very efficient use is made of the available tools, the throughput of this system is considerable higher than that of the known system and furthermore it is possible to organize the clamping and releasing activities more efficiently.

According to a further characteristic of the invention the system comprises at least two subframes which are aligned in the system and the system furthermore comprises transport means for transporting the tools and the guiding elements asigned thereto into the operating position with respect to at least one of said subframes. In such an embodiment of the invention at least two subframes are coupled to transport means for the guiding elements and the tool holders, which transport means can carry out a reciprocating movement such that either the one subframe or the other subframe is in the operating situation with respect to the tools, whereby each time the other subframe is free to remove the workpiece therefrom or to clamp a workpiece therein. It is remarked however that this embodiment, such as further embodiments, is not limited to two subframes, but that a number of subframes can be used, of which each time one, in which a workpiece is clamped in, is brought in the operating position.

The transport means in this embodiment of the invention are for instance rails running above said at least two aligned subframes.

Along said rails the guiding elements with the related tools can move from the one subframe to the other.

A further embodiment of the system according to the invention is characterized in that the at least two subframes are radially directed in the system with reference to a preselected axis of rotation, and the system furthermore comprises transport means for rotating the tools and the guiding elements asigned thereto around said axis of rotation into the operating position with respect to at least one of said two subframes. In that case the transport elements are not, as in the above described embodiment realized in the form of rails, but realized in the form of a rotating column with an arm through which the guiding elements can be moved from the one subframe to the other subframe.

Also in this radial embodiment the number of subframes is not restricted to two. Furthermore a combination of an aligned type of system and a radial type of system is possible.

"Aligned" covers also the situation with a curve in the line of subframes, positioned behind each other.

In case loose subframes are used it is preferred that the system comprises stop means which can cooperate with stop means attached to said subframes. If one of the above described embodiments comprising transport means for the guiding elements and the tools is used, then said transport means may comprise stop elements which can cooperate with stop elements attached to the subframes.

Although above the general expression "at least two subframes" is used, it is preferred that the number of subframes is determined by the ratio between on the one hand the sum of the time period necessary to clamp the workpiece in the subframe and the time period necessary to move the workpiece from the subframe, and on the other hand the time period necessary to treat or machine said workpiece.

A very stable and stiff construction can be realized in case the subframes have vertical parts which in the operating position, in which the clamped in workpiece is machined or treated, are supported onto the work floor, and which vertical parts carry the weight of the tools and the thereto asigned guiding elements. In that case one attains the result that the subframe itself is not subjected to any distorsion caused by the cooperation between the guiding elements and the tools and the load generated by said guiding elements and tools.

The invention will be explained in more detail hereinafter with reference to the attached schematical drawings.

Fig. 1 illustrates a system according to the invention in which the subframes are aligned.

Fig. 2 illustrates a system according to the invention in which the subframes are positioned radially.

Fig. 3 illustrates a number of details of a possible embodiment of a subframe and the tools with the thereto asigned guiding elements which are brought into the operating position with respect to said subframe.

The figures only show schematically the most important parts of the system and their mutual relation. On the one hand it is considered that an expert in this field is able after reading this description to fill in the necessary details himself and on the other hand lots of details can be found in the already mentioned U.S.Patent 4,310,964. Therefore only a general construction of the system will be discussed with reference to the drawings.

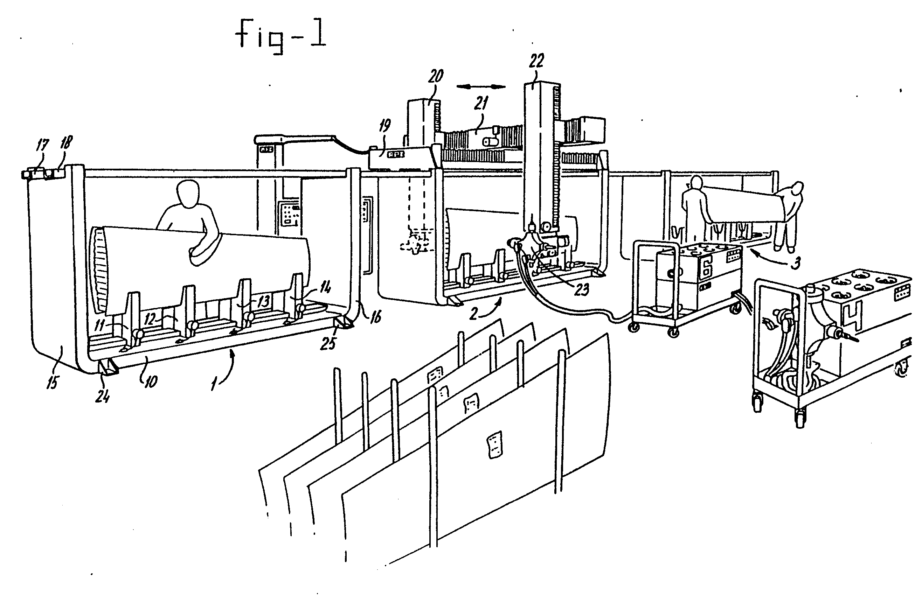

Fig. 1 illustrates a system according to the invention comprising the subframes 1, 2 and 3. Each subframe comprises a U-shaped construction of which only for subframe 1 the various parts are indicated by reference numbers in the figure. The subframe 1 comprises a lower horizontal frame beam 10 for the clamping elements 11, 12, 13 and 14 and comprises furthermore two vertically extending side beams 15 and 16. The upper ends of the vertical side beams 15 and 16 are interconnected by means of transport rails 17, 18, which transport rails are extending also above the other two subframes 2 and 3. The transport rails 17 and 18 are used for transporting a carriage 9 functioning as supporting element for the guiding elements 20, 21 and 22 which themselves are functioning as carrier for the tool holders, of which only the tool holder 23 is symbolically indicated in Fig. 1.

It will be clear that, although in Fig. 1 only the clamping elements at the under side of the work pieces are indicated it will be possible to attach further clamping elements along the vertical side walls and if necessary further clamping elements can be positioned above the workpieces using additional supporting frame

5

parts. It will be furthermore clear that the number of clamping elements is not restricted to the four, which are indicated in the figure.

The subframes 1, 2, 3 are preferably supported on the work floor such that the weight of the carriage 2 and the thereto connected guiding elements 20, 21, 22 and the tool holders 23, 24 with the therein mounted tools is transfered to the work floor as directly as possible. In the figure the legs 24 and 25 are therefore preferably attached not far from the side beams 15 and 16 so that the weight of the guiding elements, the tools and the rails is transferred through the side beams 15 and 16 and through said legs 24, 25 to the work floor without transfering any load to the horizontal beam 10. In such a configuration the weight of said mentioned elements will not have any influence on the positioning of the workpiece in relation to the tools, so that the carried out treatment will be as accurately as possible.

In Fig. 1 schematically an airplane wing is indicated as workpiece, which airplane wing is clamped into the clamping elements 11, 12, 13 and 14 at one side. It will however be clear that any other workpiece can be treated using the system according to the invention whereby one can think especially of workpieces with relatively large dimensions as for instance subassemblies of railroad wagons, locomotives, automobiles etc and especially subassemblies of workpieces onto which a relatively large number of operations of various kind has to be carried out on mutually preselected locations.

In operation the tools and the guiding elements are by means of the carriage 9 transported over the transport rails 17, 18 to above one of the subframes 1, 2 or 3 to treat the therein clamped workpiece, whereby simultaneously the other two subframes are free to remove a workpiece therefrom or to clamp a new workpiece in.

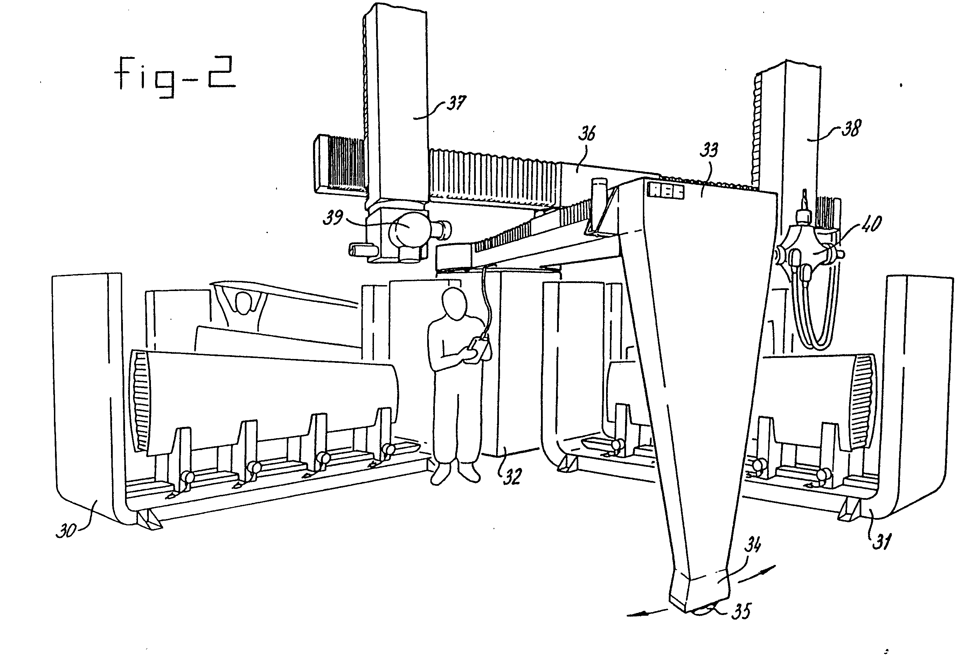

Fig. 2 illustrates a system according to the invention with a radial positioning of the subframes. The subframes 30 and 31 are, viewed in the length direction of the related subframe, directed to a vertical rotation column 32 of which parts can rotate around the vertical central axis. To said rotatable parts an arm 33 is connected of which the other end is supported onto the work floor by means of a leg 34 and a wheel 35. As will be clear from the figure the combination of the arm 33, the leg 34 and the guiding elements and tool holders carried thereby can, when the guiding elements and tool holders are moved to an end position, rotate from one subframe to the other.

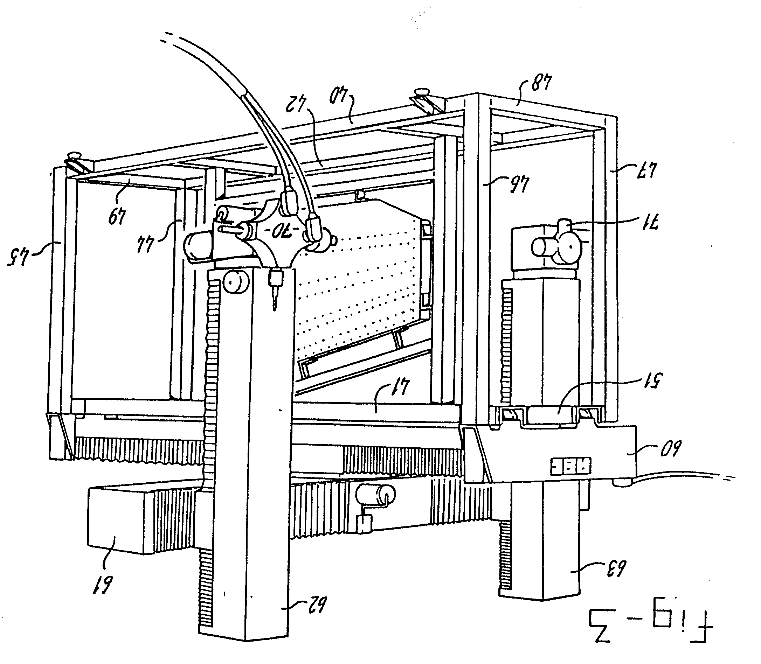

The upper side of the arm 33 functions as supporting surface for the horizontal guiding beam 36 which beam functions as carrier for the vertical guiding beams 37 and 38 to which the tool holders 39 and 40 are attached. The guiding beam 36 can move over and rotate onto the upper side of the arm 33. The guiding beams 37 and 38 can move upwards and downwards as well as to and from the workpiece. Fig. 3 illustrates more details of a possible embodiment of this guiding elements.

Fig. 3 illustrates a possible embodiment of a subframe, different from the embodiments which are schematically illustrated in Figs. 1 and 2, and Fig. 3 illustrates more details of a possible embodiment of the carriage supporting the guiding elements, said guiding elements themselves and the thereto connected tool holders. In this figure the subframe is constructed out of horizontal and vertical beams 40, 41, 42 and 43 (the last mentioned beam is not visible in the figure) respectively 44, 45, 46 and 47 which are combined into two rectangular frame parts which are kept at a mutual distance by means of the horizontal distance beams 48, 49, 50 and 51 installed inbetween those two rectangular frame parts. The upper horizontal beams 41 and 42 of this subframe are functioning furthermore as rails for the carriage 60 which carriage has at the upper side a toothed profile cooperating with a not illustrated toothed wheel in the upper guiding beam 61. Said guiding beam can also rotate in the horizontal plane onto the carriage 60. The upper guiding beam 61 is also embodied with a toothed profile cooperating with not illustrated toothed wheels in the further vertical guiding beams 62 and 63. Also these vertical guiding beams 62 and 63 have a toothed profile over which the tool holders 70 and 71 can be moved upwards and downwards.

It will be clear from this figure that by means of the various toothed profiles and the therewith cooperating toothed wheels the tool holders can move in all directions with respect to the frame. By means of the toothed profile onto the wagon 60 a displacement of the guiding elements in the horizontal direction parallel to the length direction of the subframe is possible. By means of the toothed profiles on the upper vertical guiding beam a movement of the tool holders 70, 71 in the other horizontal direction perpendicular to the length direction of the subframe, in other words perpendicular to the clamped in workpiece is possible. A vertical movement of the tool holders 70,71 is further possible by means of the toothed profile onto the vertical guiding elements 62, 63.

The tool holders themselves can carry out rotational movements around a vertical and a thereto coupled horizontal rotatable axis, so that said tool holders themselves can be brought into any desired position in relation to the workpiece.

Details about an embodiment of guiding means of this type are considered as known to the expert in this field. Apart from that also other guiding mechanisms can be used which is also considered as known to the expert in this field. The tool holders themselves can be of any known type, as for instance used in turret lathes etc.

8

## CLAIMS.

1. System for machining or treating workpieces clamped into subframes, comprising tools movable parallel to and perpendicular to a workpiece under control of a control unit, <u>characterized in that</u> the system comprises at least two subframes which can be positioned or are positioned into this system such that said tools can be moved into the operating position with respect to each of the subframes in the system to machine or treat the workpieces clamped into the respective subframes under control of said control unit.

2. System according to claim 1, <u>characterized in that</u> said at least two subframes are aligned in the system and that said system furthermore comprises transport means for transporting the tools and the guiding elements asigned thereto into the operating position with respect to at least one of said two subframes.

3. System according to claim 1, <u>characterized in that</u> said at least two subframes are radially directed in the system with reference to a preselected axis of rotation and that the system furthermore comprises transport means for rotating the tools and the guiding elements asigned thereto around said axis of rotation into the operating position with respect to at least one of said two subframes.

4. System according to claim 2 or 3, <u>characterized in that,</u> said transport means comprises stop means which can cooperate with stop means attached to the subframes.

5. System according to one of the preceding claims, <u>characterized in that,</u> the number of subframes is determined by the ratio between on the one hand some of the time periods necessary to clamp the workpiece in the subframe and the time period necessary to remove the workpiece from the subframe, and on the other hand the time period necessary to treat or machine said workpiece.

6. System according to one of the preceding claims, <u>characterized in that,</u> the subframes have vertical parts which in the operating position, in which the clamped in workpiece is machined or treated, are supported onto the work floor, and which vertical parts carry the weight of the tools and the thereto asigned guiding elements.

Fig-1

Fig-2

0105549

Fig-3

0105549

0105549

Application number

EP  83 20 1321

## EUROPEAN SEARCH REPORT

European Patent Office

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-A-2 504 523  (HÜLLER)  * Claims 1-4 * | 1,2,4, 6 | B 23 Q    1/06<br>B 23 C    1/00 |
| X | US-A-3 575 086  (DAVIS)  * Abstract * | 1,3 | |
| A | US-A-3 602 094  (BARDIAU) | | |
| A | US-A-2 603 256  (GROEN) | | |
| A | US-A-2 107 578  (ONSRUD) | | |
| A | GB-A-  869 183  (WITZIG) | | TECHNICAL FIELDS SEARCHED (Int. Cl. ³)<br><br>B 23 Q<br>B 23 C<br>B 21 J |

The present search report has been drawn up for all claims

| Place of search<br>THE HAGUE | Date of completion of the search<br>02-01-1984 | Examiner<br>DE GUSSEM J.L. |
|---|---|---|

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO Form 1503. 03.82